(19) **Europäisches Patentamt**

**European Patent Office**

**Office européen des brevets**

(11) **EP 1 137 599 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.7: **C02F 1/00**, C02F 5/10, G01N 33/18, G01N 27/00, G05D 21/00

(21) Anmeldenummer: **99958051.7**

(22) Anmeldetag: **16.11.1999**

(86) Internationale Anmeldenummer:
**PCT/EP99/08805**

(87) Internationale Veröffentlichungsnummer:
**WO 00/030980 (02.06.2000 Gazette 2000/22)**

(54) **VERFAHREN ZUR KONTROLLE DER DOSIERMENGEN VON WASSERBEHANDLUNGSPRODUKTEN**

METHOD FOR CONTROLLING THE DOSED QUANTITIES OF WATER-TREATMENT PRODUCTS

PROCEDE DE CONTROLE DU DOSAGE DE PRODUITS DESTINES AU TRAITEMENT DE L'EAU

(84) Benannte Vertragsstaaten:
**AT BE CH CY DE DK ES FI FR GB GR IE IT LI LU MC NL PT SE**

(30) Priorität: **25.11.1998 DE 19854432**

(43) Veröffentlichungstag der Anmeldung:
**04.10.2001 Patentblatt 2001/40**

(73) Patentinhaber: **Henkel Kommanditgesellschaft auf Aktien**
**40589 Düsseldorf-Holthausen (DE)**

(72) Erfinder:
- **HATER, Wolfgang**
  **D-41564 Kaarst (DE)**
- **SCHLAG, Michael**
  **D-40593 Düsseldorf (DE)**

(56) Entgegenhaltungen:
**US-A- 3 361 150**    **US-A- 3 592 212**
**US-A- 5 342 510**    **US-A- 5 576 481**
**US-A- 5 855 791**

**Beschreibung**

Die Erfindung liegt auf dem Gebiet der Konditionierung von Kühlwasser für wäßrige Kühlsysteme durch Zugabe von Wasserbehandlungsprodukten. Unter Konditionierung wird hierbei vor allem die Verminderung der korrosiven Wirkung der Wasserphase und ihre Stabilisierung gegenüber der Bildung von Niederschlägen, der Ablagerung von Härtebildnern ("scale") und der Bildung biologischer Beläge verstanden. Die Erfindung ist sowohl für offene als auch für geschlossene Kreislaufkühlsysteme geeignet. Sie ist insbesondere für offene Kreislaufkühlsysteme konzipiert. Da bei diesen der Kühleffekt auf der Verdunstung von Wasser beruht, sind sie wegen der damit verbundenen Aufkonzentrierung von Wasserinhaltsstoffen und dem freien Luftzutritt besonders anfällig gegen die Bildung anorganischer und organischer Beläge oder Ablagerungen. Die für die Konditionierung von Kühlwasser eingesetzten Wasserbehandlungsprodukte haben unterschiedliche Aufgaben zu lösen und gehören daher in der Regel unterschiedlichen Stoffklassen an. Wasserbehandlungsprodukte umfassen als wesentliche Wirkstoffe Entschäumer, Härtestabilisatoren, Dispergatoren, Korrosionsinhibitoren und Biozide. Als Härtestabilisatoren sind beispielsweise bekannt: anorganische Polyphosphate, Phosphonsäuren, Aminomethylenphosphonsäuren, Phosphorsäureester, Phosphonocarbonsäuren sowie Polycarbonsäuren, beispielsweise vom Typ der teilverseiften Polyacrylamide oder der Polymere bzw. Copolymere von Acrylsäure und/oder Methacrylsäure. In neuerer Zeit wird verstärkt der Einsatz biologisch abbaubarer Polyaminocarbonsäuren wie beispielsweise Polyasparaginsäuren oder Asparaginsäure-haltige Polymere empfohlen. Polycarbonsäuren können auch die Funktion von Dispergiermitteln ("Dispergatoren") übernehmen, d.h. sie stabilisieren mikrodispers verteilte Feststoffpartikel gegen Sedimentation und Schlammbildung. Außer den bereits genannten teilhydrolysierten Polyacrylamiden und den Polycarbonsäuren bzw. Polyaminocarbonsäuren können als Dispergiermittel eingesetzt werden: Polystyrolsulfonate, Polyvinylsulfonate, quartäre Ammoniumverbindungen, unverseifte Polyacrylamide und Polyalkylenglycole. Als Mikrobizide können Stoffe eingesetzt werden, die auf Mikroorganismen giftig wirken, beispielsweise isothiazolinderivate, Dibromnitrilopropionamid, Halogenalkylhydantoine, quartäre Ammonium- oder Phosphoniumverbindungen oder deren Derivate. Alternativ setzt man solche Stoffe ein, deren keimtötende Wirkung auf ihrem Oxidationsvermögen beruht. Beispiele solcher oxidativ wirkender Mikrobizide sind Ozon, Chlor, Brom, Chlordioxid, Hypochlorite, Hypobromite oder Wasserstoffperoxid. Einige der zuvor genannten Härtestabilisatoren haben auch eine korrosionsinhibierende Wirkung. Beispielsweise genannt seien: Phosphonsäuren wie beispielsweise 1-Hydroxyethan-1,1-diphosphonsäure oder Aminotrimethylenphosphonsäure, Phosphonocarbonsäuren wie beispielsweise 2-Phosphonobutan-1,2,4-tricarbonsäure. Polycarbonsäuren wie beispielsweise Copolymere der Acrylsäure und Methacrylsäure, Polyacrylate, Copolymere der Acrylsäure und des Acrylsäuremethylesters oder Polyaminosäuren können ebenfalls korrosionsinhibierend wirken. Anorganische Korrosionsinhibitoren sind beispielsweise Zinkionen, Molybdate, Chromate, Silicate, Carbonate, Ortho-, Pyro- und Polyphosphate, sowie Silicate. In geschlossenen Kühlsystemen können auch Borate, Nitrite oder Benzoate als Korrosionsinhibitoren eingesetzt werden. Die auf die Anwesenheit von Sauerstoff zurückzuführende Korrosion versucht man durch chemische Bindung des Sauerstoffs einzudämmen. Hierzu setzt man Sauerstoffbindemittel wie beispielsweise Sulfite, Hydrazin, Amine (z.B. Diethylhydroxylamin oder andere Hydroxylaminderivate, Arylamine) oder Chinon- oder Hydrochinonderivate ein.

Wenn hier von "Wirkstoffen" gesprochen wird, so sind damit Substanzen gemeint, die im Kreislaufwasser eine charakteristische Wirkung entfalten. Eine solche Wirkung kann beispielsweise das Verzögern von Korrosionserscheinungen oder das Verhindern einer Niederschlagsbildung sein. In der Praxis werden solche Wirkstoffe nicht in reiner Form, sondern zumindest als wäßrige Lösung in das Kreislaufwasser dosiert. In der Regel enthalten diese wäßrigen Lösungen 2 oder mehr Wirkstoffe, die entweder den selben Effekt bewirken und sich hierin verstärken oder die unterschiedliche Effekte bewirken. Beispielsweise ist es üblich, Härtestabilisatoren mit Dispergatoren zu kombinieren. Eine solche wäßrige Lösung, die über Dosiereinrichtungen in das Kreislaufwasser dosiert werden kann und die einen oder mehrere Wirkstoffe enthält, wird im folgenden als "Produkt" bezeichnet.

Um solche Wasserbehandlungsprodukte effektiv und wirtschaftlich einzusetzen, müssen die Wirkstoff-Konzentrationen in dem Kreislaufwasser des Kühlkreislaufs in engen Grenzen gehalten werden. Unterschreitet man produktspezifische Mindestkonzentrationen, tritt die technisch erwünschte Wirkung nicht zuverlässig ein und die Leistungsfähigkeit des Kühlkreislaufs wird beispielsweise durch Ablagerungen beeinträchtigt. Zu hohe Konzentrationen an Wasserbehandlungswirkstoffen führen zu keinem zusätzlichen Nutzeffekt. Sie erhöhen jedoch die Betriebskosten und führen bei Ablassen von Kreislaufwasser in die Umwelt zu einer unnötigen Umweltbelastung mit den Wasserbehandlungsprodukten.

Dieses Dosierproblem stellt sich besonders bei offenen Kühlkreisläufen. Hier wird das Umlaufwasser in Wärmetauschern oder Kondensatoren erwärmt und die zugeführte Wärme im Kühlturm durch Verdunstung eines Teiles des Umlaufwassers wieder entzogen. Dieser Prozeß führt zur Aufkonzentrierung der Wasserinhaltsstoffe. Um deren Konzentration im Kreislaufwasser zu begrenzen, wird ein Teil des Kreislaufwassers aus dem System abgeflutet. Dabei kann die Abflutung automatisch veranlaßt werden, wenn ein vorgewählter Wasserparameter (z.B. Leitfähigkeit, Dichte, Konzentration ausgewählter Wasserinhaltsstoffe) einen vorgegebenen Grenzwert überschreitet. Darüber hinaus gehen dem Kühlwasserkreislauf unbestimmte Mengen Kreislaufwasser zum Beispiel als Spritzwasserverluste, durch Leckagen und durch unkontrollierte Wasserentnahme verloren. Die Menge des abgefluteten und des verdunsteten Wassers sowie die Menge der unbestimmten Wasserverluste wird durch eine entsprechende Menge Frischwasser (Zulaufwasser) ergänzt. Die Ergänzung kann über eine Messung des Füllstandes geregelt werden. Dabei muß gewährleistet bleiben, daß das Kreislaufwasser die korrekten Konzentrationen an Wasserbehandlungswirkstoffen beibehält. Dementsprechend muß die mit flüssigem Wasser aus dem Kreislaufsystem entfernte Menge an Wasserbehandlungswirkstoffen möglichst genau ergänzt werden.

Das in der Technik häufig praktizierte Verfahren, Produkte zur Wasserbehandlung proportional zur Menge an Zulaufwasser zu dosieren, hat den Nachteil, bei Störungen (z.B. Leckagen) zu Fehldosierungen zu führen. Das Problem, die Konzentrationen der Wirkstoffe auf optimale Werte einzustellen, läßt sich prinzipiell dadurch lösen, daß man die jeweils aktuellen Konzentrationen im Kreislaufsystem mißt und die Sollkonzentration einstellt. Dies scheitert in der Praxis jedoch häufig an der mangelnden Genauigkeit der Meßmethoden und ihrer Empfindlichkeit für Störungen sowie an dem erforderlichen hohen Betreuungsaufwand. Die analytischen Messungen können daher häufig nicht routinemäßig und insbesondere nicht automatisiert und/oder zeitnah am Ort des Kühlkreislaufs erfolgen. Vielmehr ist hierfür eine analytische Ausrüstung erforderlich, die in der Regel nur in Speziallabors zur Verfügung steht.

Im Stand der Technik wurde zur Lösung dieses Analysenproblems vorgeschlagen, die Konzentrate der Wasserbehandlungsprodukte, die dem Kühlkreislauf zudosiert werden, mit Tracersubstanzen wie beispielsweise Fluoreszenzfarbstoffen zu versetzen. Dabei wählt man Tracersubstanzen, deren Konzentrationen durch einfache physikalische Methoden wie beispielsweise optische Absorption- oder Emissionsmessungen bestimmbar sind. Unter der Annahme, daß das Mengenverhältnis Tracersubstanz zu Wasserbehandlungswirkstoff im Kühlkreislauf dasselbe bleibt wie im Konzentrat, versucht man, aus der gemessenen Konzentration der Tracersubstanz die vermutlich vorliegende Konzentration an Wasserbehandlungswirkstoff zu ermitteln. Derartige Verfahren sind beispielsweise Gegenstand der EP-A-320 086 und der EP-A-730 152.

Die EP-B-504 520 schlägt alternativ hierzu vor, als Tracer wirkende Substituenten chemisch an die Wasserbehandlungswirkstoff zu binden. Hierdurch wird das Problem umgangen, daß durch Absorptionvorgänge die Tracermoleküle und die Wirkstoffmoleküle in unterschiedlichem Maße aus dem Kreislaufwasser entfernt werden. Gemäß der Lehre der EP-B-504 520 bindet man fluoreszierende Gruppen direkt an polymere Wirkstoffe. Auf Wirkstoffe mit wesentlich niedrigerem Molekulargewicht wie beispielsweise Korrosionsinhibitoren und Komplexbildner ist dieses Verfahren jedochr nicht übertragbar, ohne die Wirkungsweise dieser Stoffe zu beeinflussen. In jedem Falle erhöht dieses Verfahren die Kosten der Wasserbehandlungsprodukte, da das Anbinden der fluoreszierenden Gruppe einen zusätzlichen Syntheseschritt erfordert. Außerdem verfälschen fluoreszierende Stoffe im Kreislaufwasser die Messungen.

Aufgrund dieser Problematik wurde im Stand der Technik auch vorgeschlagen, bestimmte Parameter von Abflutwasser und Zulaufwasser miteinander in Relation zu setzen und die Wasserbehandlungsprodukte proportional zu dieser Relation zu dosieren. Beispielsweise schlägt die US-A-3,918,469 ein Verfahren zur Dosierung von Wasserbehandlungsprodukten vor, bei dem man die elektrischen Leitfähigkeiten von Zulaufwasser und Abflutwasser durcheinander dividiert, den Quotienten mit dem Volumenstrom des Zulaufwassers multipliziert und eine Pumpe ansteuert, die proportional zu dem so erhaltenen Zahlenwert Wasserbehandlungsprodukte in den Kühlkreislauf dosiert. Stark schwankende Leitfähigkeiten des Zulaufwassers oder größere Leckagen führen jedoch zu erheblichen Fehldosierungen.

Die deutsche Patentanmeldung 198 47 275 beschreibt ein Verfahren zur Ermittlung der Dosiermengen von Wasserbehandlungsprodukten, bei dem das Analysenproblem umgangen wird. Gemäß dieser Lehre bestimmt man den Wasserverlust im Kühlkreislauf dadurch, daß man ausgewählte Stoffparameter im Kreislaufwasser und im Zulaufwasser mißt und zueinander in Relation setzt. Man gibt dann eine solche Menge eines oder mehrerer Produkte zur Wasserbehandlung zu, die sich errechnet aus der vorgegebenen Sollkonzentration der Wirkstoffe multipliziert mit dem Wasserverlust. Durch dieses Verfahren wird weitgehend sichergestellt, daß die Soll-Konzentration der Wirkstoffe mit hoher Wahrscheinlichkeit eingestellt bleibt.

Trotz der vorstehend beschriebenen Probleme werden in der Praxis zur Dosierung von Wasserbehandlungsprodukten häufig Regelkreise eingesetzt, bei denen man die Konzentration von Wasserbehandlungswirkstoffe direkt oder indirekt zu ermitteln versucht und bei Abweichungen eine entsprechende Menge an Wasserbehandlungsprodukten zum kreislaufwasser zudosiert, um die Soll-Konzentration der Wasserbehandlungswirkstoffe einzustellen. Jedoch ist hierbei nicht gewährleistet, daß die aktuelle Ist-Konzentration der Wirkstoffe so genau ermittelt wird, daß eine Unter- oder Überdosierung der Wasserbehandlungsprodukte zuverlässig vermieden werden kann. Weiterhin ist es nach solchen Verfahren nicht möglich, die Soll-Konzentration automatisch an geänderte Bedingungen im Kühlkreislauf wie beispielsweise eine geänderte Qualität des Zulaufwassers oder an eine geringere oder erhöhte Eindickung des Kreislaufwassers automatisch anzupassen. Weiterhin ist bisher nicht vorgesehen, die Funktionsfähigkeit der für den Regelkreis eingesetzten Einrichtungen automatisch zu überprüfen.

Die Erfindung stellt ein Verfahren bereit, mit dem wahlweise die Wirkung der Behandlung des Kreislaufwassers automatisch überprüft, der Verbleib der Wasserbehandlungswirkstoffe kontrolliert und die Soll-Konzentration von Wasserbehandlungsprodukten an die aktuellen Verhältnisse im Kühlkreislauf angepaßt werden kann.

Die Erfindung betrifft ein Verfahren zur Kontrolle der Dosiermenge von Produkten zur Behandlung des Kreislaufwassers von offenen oder geschlossenen Kühlkreisläufen, wobei man

a) in einem ersten Regelkreis die aktuelle Ist-Konzentration eines oder mehrerer Wirkstoffe zur Behandlung des Kreislaufwassers ermittelt, mit einer vorgegebenen Soll-Konzentration vergleicht und in dem Falle, daß die Ist-Konzentration geringer ist als die Soll-Konzentration, eine entsprechende Menge eines oder mehrerer Produkte zur Behandlung des Kreislaufwassers in das Kreislaufwasser zudosiert und

b) in einem zweiten Regelkreis eine oder mehrere Kontrollgrößen ermittelt, die für den Erfolg der Behandlung des Kreislaufwassers durch Dosierung eines oder mehrerer Produkte zur Behandlung des Kreislaufwassers im ersten Regelkreis charakteristisch sind, und beim Überschreiten einer vorgegebenen Abweichung mindestens einer Kontrollgröße von einem vorgegebenen Erwartungswert automatisch eine oder mehrere der folgenden Maßnahmen veranlaßt: Erhöhung der Analysenhäufigkeit im ersten und/oder zweiten Regelkreis, Anpassen der Soll-Konzentration eines oder mehrerer Wirkstoffe zur Behandlung des Kreislaufwassers im ersten Regelkreis, Überprüfung der Funktionsfähigkeit der im ersten und/oder zweiten Regelkreis eingesetzten Vorrichtungen.

Dieses Verfahren ist völlig unabhängig von der chemischen Natur der zu dosierenden Wasserbehandlungsprodukte. Beispielsweise kann es sich hierbei handeln um Produkte, die Entschäumer, Härtestabilisatoren, Dispergatoren, Korrosionsinhibitoren, Biozide, Säuren, Laugen und Kombinationen hiervon enthalten. Einzelne Stoffe und Stoffklassen, die hierfür beispielsweise in Frage kommen, wurden einleitend aufgezählt. Demnach können die dort beispielhaft genannten Stoffe und Stoffgruppen im Rahmen des erfindungsgemäßen Verfahrens eingesetzt werden. Selbstverständlich können für die unterschiedlichen Wirkstoffe unterschiedliche Werte für die Soll-Konzentration vorgegeben werden.

Verfahren zur Steuerung der Dosierung von Wasserbehandlungsprodukten gemäß dem genannten ersten Regelkreis sind im Stand der Technik bekannt. Hierbei können beispielsweise die Konzentrationen der einzelnen Wirkstoffe bestimmt werden, oder die Konzentrationen von Leitkomponenten, aus denen auf die Konzentrationen der weiteren Wirkstoffe geschlossen werden kann; oder man kann eine mittelbare Bestimmung der Wirkstoffkonzentration durchführen. Eine solche mittelbare Bestimmung kann beispielsweise dadurch erfolgen, daß dem Wasserbehandlungsprodukt eine als Tracer wirkende Substanz in einer bekannten Konzentration zugegeben wird, so daß aus der Bestimmung der Konzentration der Tracer-Substanz im Kreislaufwasser auf die Konzentrationen der Wirkstoffe der Wasserbehandlungsprodukte geschlossen werden kann. Als Tracer kommen beispielsweise Substanzen in Frage, die beim Bestrahlen mit elektromagnetischer Strahlung (z. B. sichtbares oder ultraviolettes Licht) eine Fluoreszenzstrahlung liefern, aus deren Intensität die Tracer-Konzentration ermittelt werden kann.

Der erfindungsgemäß vorgesehene zweite Regelkreis dient dazu, wahlweise die Wirkung der im ersten Regelkreis getroffenen Maßnahmen einschließlich dem Produktverbleib zu kontrollieren und/oder die Soll-Größen für den ersten Regelkreis an die aktuellen Verhältnisse im Kühlkreislauf anzupassen. Durch den zweiten Regelkreis können weiterhin Fehlfunktionen im ersten Regelkreis aufgedeckt werden. Solche Fehlfunktionen können beispielsweise folgende Ursachen haben: Filter für das Kreislaufwasser vor der Konzentrationsbestimmung funktionieren nicht, Detektoren wie beispielsweise Elektroden oder Meßzellen zum Bestimmen einer Lichtintensität sind verschmutzt oder gestört, die Kalibrierung der Meßeinrichtung stimmt nicht mehr, Füllstandsmesser oder Dosiereinrichtungen für die Wasserbehandlungsprodukte sind gestört sowie möglicherweise weitere Ursachen wie beispielsweise Trübung des Kreislaufwassers oder unkontrollierte Produkteinbrüche. Derartige Fehlfunktionen können dazu führen, daß im ersten Regelkreis eine andere Konzentration eines Wasserbehandlungsprodukts gemessen wird, als tatsächlich vorliegt. Eine tatsächliche Überdosierung führt zu unnötigen Kosten und zu unnötiger Umweltbelastung, eine tatsächliche Unterdosierung kann zu Störungen der Funktion des Kühlkreislaufs führen. Außerdem kann selbst bei korrekter Dosierung der vorgegebenen Soll-Mengen ein unzureichendes Behandlungsergebnis auftreten, wenn sich entweder Parameter im Kreislaufwasser (beispielsweise Wasserzusammensetzung oder Eindickrate) ändern oder weil sich aufgrund veränderter Verhältnisse die Produktwirkung ändert.

Für den zweiten Regelkreis können je nach verfolgtem Zweck unterschiedliche Kontrollgrößen ausgewählt werden. Beispielsweise kann die eine oder mehrere Kontrollgrößen im zweiten Regelkreis ausgewählt sein aus der Konzentration mindestens eines Wirkstoffs zur Behandlung des Kreislaufwassers, dem Produktschwund im Kreislaufwasser, dem pH-Wert des Kreislaufwassers, der Säurekapazität des Kreislaufwassers, der Leitfähigkeit des Kreislaufwassers, einem Inhaltsstoff des Kreislaufwassers, der Korrosionsrate im Kreislaufwasser, dem Pitting-Index (= Fluktuation der elektrochemisch gemessenen Korrosionsrate) im Kreislaufwasser, der Foulingrate oder einer anderen Größe, die die Ablagerungstendenz im Kreislaufwasser beschreibt, und der Keimbelastung im Kreislaufwasser. Erwünschtenfalls können die entsprechenden Parameter auch im Zulaufwasser gemessen werden. Setzt man entsprechende Werte im Kreislaufwasser und im Zulaufwasser zueinander in Relation, kann die Eindickrate oder Eindickung des Kreislaufwassers ermittelt werden. Hierfür eignen sich beispielsweise die elektrische Leitfähigkeit oder die Konzentrationen ausgewählter Wasserinhaltsstoffe. Eine Ermittlung der Eindickrate ist erforderlich, wenn der Produktschwund (auch als Produktzehrung bezeichnet) bestimmt werden soll.

Demnach kann die Kontrollgröße beispielsweise in der Konzentration eines Wasserbehandlungswirkstoffs liegen. Sofern der erste Regelkreis ordnungsgemäß arbeitet, sollte hierbei ein Wert nahe der Soll-Konzentration ermittelt werden. Eine signifikante Abweichung deutet auf einen Fehler im ersten Regelkreis hin. Weiterhin können als Kontrollgrößen Inhaltsstoffe oder sonstige Parameter des Kreislaufwassers dienen. Aus deren Werten kann insbesondere abgeleitet werden, ob bestimmte Soll-Konzentrationen von Wasserinhaltsstoffen im ersten Regelkreis verändert werden müssen. Weiterhin können im zweiten Regelkreis Kontrollgrößen wie beispielsweise Korrosionsrate, Pitting-Index, Fouling-Rate oder Keimbelastung herangezogen werden. Abweichungen vom erwarteten Verhalten des Kreislaufwassers deuten ebenfalls entweder eine Fehlfunktion des ersten Regelkreises an oder sind ein Zeichen dafür, daß die Soll-Konzentrationen der für die jeweilige Wirkung vorgesehenen Wasserbehandlungsprodukte angepaßt oder daß weitere Produkte dosiert werden müssen.

Als Kontrollgröße im zweiten Regelkreis kann der Produktschwund im Kreislaufwasser dienen. Hierbei wird überprüft, ob zumindest angenähert diejenige Menge an Wasserbehandlungsprodukt im Kreislaufwasser vorliegt, die aufgrund der zugeflossenen Menge an Zusatzwasser und aufgrund der Dosierung und der Eindickrate zu erwarten wäre. Hierzu ermittelt man die Menge an Zulaufwasser im Kontrollintervall, d. h. im Zeitintervall zwischen der aktuellen Kontrolle und der vorhergegangenen Kontrolle. Weiterhin bestimmt man die Eindickrate des Kreislaufwassers. Dies kann, wie dem Fachmann bekannt, beispielsweise dadurch geschehen, daß man den Quotienten der elektrischen Leitfähigkeit des Kreislaufwassers und des Zulaufwassers bestimmt. Alternativ kann der Quotient zwischen den Konzentrationen ausgewählter Wasserinhaltsstoffe (z. B. Chloridionen, Nitrationen, Natriumionen, Calciumionen etc.) im Kreislaufwasser und im Zulaufwasser ein Maß für die Eindickung darstellen. Aus der Menge an Zulaufwasser im Kontrollintervall und der Eindickung des Kreislaufwassers läßt sich ermitteln, welche Menge

an Wasserbehandlungs-produkt im Kontrollintervall hätte insgesamt dosiert werden müssen, um im Kreislaufwasser die Soll-Konzentration aufrecht zu erhalten.

In dieser Ausführungsform der Erfindung wird nun überprüft, welche Menge an Wasserbehandlungsprodukt theoretisch hätte dosiert werden müssen. Man vergleicht dies mit der tatsächlich dosierten Menge. Dabei ermittelt man die tatsächlich dosierte Menge am einfachsten dadurch, daß man mißt, um welchen Betrag der Füllstand des Wasserbehandlungsprodukts im Vorratsgefäß im Kontrollintervall abgenommen hat. Alternativ hierzu kann man während der Dosierung der Wasserbehandlungsprodukte im Kontrollintervall messen, welche Volumina tatsächlich dosiert werden. Dies ist durch Meßeinrichtungen wie beispielsweise Flügelradzähler oder Ovalradzähler möglich. Da es in Kühlkreisläufen üblicherweise zu einer Produktzehrung (Produktschwund) der Wirkstoffe der Wasserbehandlungs-produkte kommt, ist zu erwarten, daß die tatsächlich dosierte Menge an Wasserbehandlungsprodukt oberhalb der Menge liegen sollte, die theoretisch erforderlich wäre, um im Gesamtvolumen des Kreislaufwassers die Soll-Konzentration aufrecht zu erhalten. Ein Produktschwund kann beispielsweise dadurch zustande kommen, daß Wirkstoffe an Wandungen oder an Feststoffpartikeln im Kreislaufwasser adsorbiert werden, so daß sie nicht mehr zum Entfalten ihrer Wirkung zur Verfügung stehen. Oder die Wirkstoffe können durch chemische Reaktionen aus dem Kreislaufwasser ausgefällt oder chemisch verändert, beispielsweise biologisch abgebaut werden.

Man prüft nun im zweiten Regelkreis, ob unter Berücksichtigung von Erfahrungswerten für den Produktschwund etwa diejenige Menge an Wasserbehandlungsprodukt tatsächlich dosiert wurde, die aufgrund der ermittelten Zulaufwassermenge sowie der Eindickung theoretisch zu erwarten wäre. Größere Abweichungen oder Veränderungen deuten auf eine Fehlfunktion im ersten Regelkreis hin oder auf eine Veränderung der Betriebsbedingungen.

Eine mögliche Ursache für Störungen der Meßeinrichtungen im ersten Regelkreis ist eine Trübung des Kreislaufwassers, die durch die in der Regel vorgesehene Filtration vor der Messung nicht ausreichend entfernt wird. Bei einer optischen Messung von Wirkstoffkonzentrationen kann eine Trübung des Kreislaufwassers eine höhere Wirkstoffkonzentration vortäuschen als tatsächlich vorliegt. In diesem Falle würde zu wenig Wasserbehandlungsprodukt in den Kreislauf dosiert. Eine derartige Fehlfunktion fällt auf, wenn man in dieser erfindungsgemäßen Ausführungsform feststellt, daß der Produktverbrauch deutlich geringer ist als theoretisch erwartet. In einem derartigen Fall sieht man vorzugsweise vor, daß zunächst die Trübung des Kreislaufwassers - ggf. nach Filtration - gemessen wird, bevor im Rahmen des zweiten Regelkreises eine der vorgesehenen Aktionen ausgelöst wird. Stellt man hierbei eine unzulässig hohe Trübung fest, gibt man als beorzugte Aktion eine Warnmeldung aus, in der der Hinweis enthalten ist, daß der erste Regelkreis wegen zu hoher Wassertrübung fehlerhaft arbeitet.

Eine höhere Produktzehrung als erwartet, d. h. ein höherer tatsächlicher Produktverbrauch als theoretisch erwartet, kann unterschiedliche Ursachen haben: Der Effekt kann an einer Fehlfunktion der Einrichtungen im ersten Regelkreis, an einer zu starken biologischen Belastung des Kreislaufwassers oder auch an einer Änderung der Zusammensetzung des Zulaufwassers liegen. Beispielsweise kann man im Rahmen des erfindungsgemäßen Verfahrens automatisch die Funktionsfähigkeit der Einrichtungen des ersten und/oder zweiten Regelkreises überprüfen, durch wiederholte Messungen den beobachteten Effekt bestätigen und/oder eine quantitative Bestimmung ausgewählter Inhaltsstoffe des Zulaufwassers sowie eine Messung der biologischen Belastung durchführen. Soweit bei festgestellten Abweichungen von vorgegebenen Toleranzwerten nicht automatisch die Dosiermenge von Wirkstoffen erhöht werden kann, die dem beobachteten Effekt entgegenwirken, kann vorgesehen werden, daß eine Warnmeldung ausgegeben wird, die auf die zu hohe biologische Belastung des Kreislaufwassers oder auf eine geänderte Qualität des Zulaufwassers hinweist.

Zur Überprüfung der Einrichtungen im ersten und/oder zweiten Regelkreis können geeignete Prüflösungen verwendet werden. Werden in den Prüflösungen nicht die erwarteten Konzentrationen festgestellt, wird vorzugsweise eine Warnmeldung ausgegeben, die das Reinigen oder den Austausch der verwendeten Sensoren empfiehlt.

Für offene Kühlkreisläufe wird in einer bevorzugten Ausführung des Verfahrens als Kontrollgröße der Produktschwund $\Delta c(t)$ herangezogen. Dabei erfolgt eine Bestimmung der theoretischen Wirkstoffkonzentration $c_{ber}(t)$ im Kontrollintervall aus mindestens einer Kontrollmeßgröße gemäß

$$\Delta c(t) = 100 \ [(c_{ber}(t) - c(t))/ \ c_{ber}(t)] \qquad [\%],$$

wobei $c(t)$ die gemessene Wirkstoffkonzentration darstellt.

Wenn $\Delta c(t)$ den vorgegebenen Bereich über- oder unterschreitet, werden die oben aufgeführten Maßnahmen eingeleitet.

Die theoretische Wirkstoffkonzentration kann dabei entweder nach

$$c_{ber}(t) = [c(t_0) \ (V_0 - V_{verlust}(\Delta t)) + m(\Delta t)] / V_0$$

wobei $V_0$ das Systemvolumen (= gesamte Wassermenge im Kühlkreislauf), $c(t_0)$ die Wirkstoffkonzentration zu Beginn des Kontrollintervalles darstellt, oder im Falle großer Bilanzierungszeiträume (($\Delta t$) > Halbwertszeit des Systems) nach

$$c_{ber}(t) = m(\Delta t) \ V_{verlust}(\Delta t)$$

näherungsweise bestimmt werden. $m(\Delta t)$ ist dabei die im Kontrollintervall $\Delta t$ dosierte Wirkstoffmenge.

In dieser Ausführungsform des erfindungsgemäßen Verfahrens, bei dem man überprüft, ob der tatsächliche Produktverbrauch dem theoretisch zu erwartenden entspricht, ist es wesentlich, die Wasserverluste des Kreislaufwassers während des Kontrollintervalls zu kennen.

Die Wasserverluste im Kontrollintervall $V_{verlust}$ ($\Delta t$) können wie folgt bestimmt werden:

- näherungsweise durch die Abflutmenge $V_{ABF}(\Delta t)$
- durch die Zusatzwassermenge $V_{ZSW}(\Delta t)$ in Verbindung mit der Eindickung EZ gemäß $V_{verlust}(\Delta t) = V_{ZSW}(\Delta t) / EZ$
- durch das in der deutschen Patentanmeldung DE 198 47 275 beschriebene Verfahren:

Dieses Verfahren kann durchgeführt werden, indem man

a) zu einem vorgegebenen Zeitpunkt $t_0$ den Zahlenwert $P_0$ mindestens eines Parameters des Kreislaufwassers mißt, der ausgewählt ist aus den Konzentrationen ausgewählter Inhaltsstoffe des Kreislaufwassers, die über das Zulaufwasser in den Kühlkreislauf eingebracht werden, und den Werten ausgewählter physikalischer Parameter des Kreislaufwassers,

b) zu einem oder mehreren Zeitpunkten zwischen dem Zeitpunkt $t_0$ und einem später liegenden Zeitpunkt $t_1$ den oder die Zahlenwerte $P_Z$ des oder der im Teilschritt a) im Kreislaufwasser gemessenen Parameter im Zulaufwasser sowie die Menge $V_Z$ des zwischen den Zeitpunkten $t_0$ und $t_1$ zugelaufenen Zulaufwassers mißt,

c) zum Zeitpunkt $t_1$ den Zahlenwert $P_1$ des oder der im Teilschritt a) im Kreislaufwasser gemessenen Parameter im Kreislaufwasser erneut mißt und hieraus

d) den im Zeitintervall zwischen den Zeitpunkten $t_0$ und $t_1$ eingetretenen effektiven Verlust $V_{verlust}$ an Kreislaufwasser berechnet nach einer der Gleichungen (Ia) oder (Ib):

$$V_{Verlust} = [(P_0 - P_1) \cdot V + P_Z \cdot V_Z] / P_0 \quad \text{(Ia)}$$

$$V_{Verlust} = [(P_1^* - P_1) \cdot V]/P_0 \qquad \text{(Ib)}$$

wobei V das Volumen des Kreislaufwassers zum Zeitpunkt $t_0$ bedeutet, $P_1^*$ den Wert darstellt, den $P_1$ theoretisch haben müßte, wenn keine Wasserverluste eingetreten wären und der sich berechnet gemäß Gleichung (Ic):

$$P_1^* = (P_0 \cdot V + P_Z \cdot V_Z)/V \qquad \text{(Ic)}$$

und alle Volumen- und Konzentrationsangaben auf die gleiche Maßeinheit für das Volumen bezogen werden.

Der Produktverbrauch kann z.B. durch Messung des Füllstandes im Vorratsbehälter oder durch Oval- oder Flügelradzähler bestimmt werden.

$V_{verlust}(\Delta t)$ kann durch Messung der Zusatzwassermenge, z. B durch induktive Messung des Durchflußes oder über Flügelradzähler, und der Konzentrationen eines im Zusatzwasser enthaltenen Stoffes, wie Natrium, Kalium, Chlorid, Sulfat, Nitrat, Calcium, Magnesium, Gesamthärte, $K_{S4,3}$, $K_{S8,2}$, im Zusatzwasser und im Kreislaufwasser gemäß dem in der deutschen Patentanmeldung DE 198 47 275 beschriebenen Verfahren bestimmt werden.

Die Messung von $V_{ABF}(\Delta t)$ und $V_{ZSW}(\Delta t)$ kann z. B. durch induktive Messung des Durchflußes oder über Flügelradzähler erfolgen.

Die Eindickung kann durch Messung der Stoffkonzentrationen im Kreislaufwasser und im Zusatzwasser und Verhältnisbildung bestimmt werden. Unter Stoff wird beispielsweise Chlorid, Sulfat, Calcium, Magnesium, Gesamthärte, Leitfähigkeit, $K_{S4,3}$, $K_{S8,2}$, Natrium, Kalium, Nitrat verstanden.

Näherungsweise kann die Bestimmung des Produktschwundes vereinfacht werden, indem eine oder mehrere, aber nicht alle Meßgrößen durch konstante Erfahrungswerte ersetzt werden. Beispielsweise kann bei konstanter Zusatzwasserqualität die Bestimmung der Eindickung näherungsweise durch Messung eines im Kreislaufwasser enthaltenen Stoffes erfolgen und für die entsprechende Größe des Zusatzwassers ein konstanter Erfahrungswert eingesetzt werden. Weiterhin kann der Produktschwund nur über den gemessenen Produktverbrauch oder die gemessene Zusatzwassermenge bestimmt werden.

In diesen Ausführungsformen kann als Kontrollgröße neben dem Produktschwund auch direkt die Meßgröße z. B. Produktverbrauch oder eine daraus abgeleitete Größe, wie die berechnete Produktkonzentration verwendet werden.

Besonders bevorzugt ist die Bestimmung des Produktschwundes durch Messung der Zusatzwassermenge, des Produktverbrauches und der Eindickung. Dabei wird die Eindickung bevorzugt durch Messung der Calcium-, Chloridkonzentration oder der Leitfähigkeit bestimmt.

Für geschlossene Kühlkreislaufsysteme, in denen keine Verdunstung und keine Abflutung stattfindet, wird in einer bevorzugten Ausführung des Verfahrens als Kontrollgröße die Zusatzwassermenge und/oder der Produktverbrauch im Kontrollintervall herangezogen. Dazu wird die Zusatzwassermenge und/oder der Produktverbrauch gemessen.

Wenn zwei oder mehrere Produkte kontinuierlich dosiert werden, kann das Verfahren analog erweitert werden.

Eine weitere Ausführungsform des erfindungsgemäßen Verfahrens ist dadurch gekennzeichnet, daß die Kontrollgröße im zweiten Regelkreis ausgewählt ist aus der Korrosionsrate im Kreislaufwasser, dem Pitting-Index im Kreislaufwasser, der Foulingrate oder einer anderen Größe, die die Ablagerungstendenz im Kreislaufwasser beschreibt, und der Keimbelastung im Kreislaufwasser und daß man in dem Fall, daß der Wert der Kontrollgröße einen vorgegebenen Maximalwert überschreitet, die im ersten Regelkreis eingesetzten Vorrichtungen überprüft und/oder im ersten Regelkreis die Soll-Konzentration desjenigen Wirkstoffs zur Behandlung des Kreislaufwassers erhöht, das der Erhöhung der jeweiligen Kontrollgröße entgegenwirkt.

Gemäß dieser Ausführungsform überprüft man also, ob das Versetzen des Kreislaufwassers mit Wasserbehandlungsprodukten den erwarteten Erfolg bringt. Hierfür gibt man Erfahrungwerte vor, in welchem Bereich unter den aktuellen Bedingungen des Kühlkreislaufs die gewählte Kontrollgröße liegen sollte. Ist der aktuelle Wert für mindestens eine dieser Kontrollgrößen um einen vorzugebenden Wert höher als erwartet, kann zum einen vorgesehen werden, daß eine Warnmeldung ausgegeben und/oder automatisch eine Überprüfung der Einrichtungen für den ersten Regelkreis gestartet wird. Zum anderen kann vorgesehen werden, in diesem Fall im ersten Regelkreis die Soll-Konzentration desjenigen Wirkstoffs zur Behandlung des Kreislaufwassers zu erhöhen, daß der Erhöhung der jeweiligen Kontrollgröße entgegenwirkt. Diese Maßnahme kann insbesondere dann ergriffen werden, wenn die Überprüfung der Einrichtungen im ersten Regelkreis es wahrscheinlich macht, daß diese korrekt arbeiten. So kann beispielsweise bei erhöhter Korrosionsrate oder Pitting-Index die Soll-Konzentration von Korrosionsinhibitoren erhöht werden. Bei einer erhöhten Ablagerungstendenz im Kreislaufwasser (beispielsweise der Foulingrate) kann die Soll-Konzentration der Dispergatoren und/oder der Härtestabilisatoren erhöht werden. Erhöhte Keimbelastung ist ein Indiz dafür, die Soll-Konzentration von Bioziden zu erhöhen oder bei einer Stoßdosierung von Bioziden entweder die Frequenz der Einzeldosierungen oder die Biozid-Menge pro Einzeldosierung heraufzusetzen.

Verfahren zum Bestimmen der Korrosionsrate, dem Pitting-Index, der Ablagerungstendenz im Kreislaufwasser sowie der Keimbelastung sind dem Fachmann auf dem Gebiet der Kühlwasserbehandlung bekannt. Beispielsweise kann die Korrosionsrate gemessen werden durch Bestimmung des elektrochemischen Potentials einer geeigneten Meßelektrode gegenüber einer Referenz-Elektrode, durch Messen des Korrosionsstroms zwischen einer Meßelektrode und einer Gegenelektrode bei vorgegebenem Potential, durch Messen des linearen Polarisationswiderstandes, beispielsweise mit einem Corrosometer$^R$ oder Corrater$^R$, oder Messung des elektrischen Widerstandes eines Drahtes, dessen Querschnitt sich infolge von Korrosion verringert. Die Ablagerungstendenz im Kreislaufwasser kann beispielsweise dadurch ermittelt werden, daß man einen Teil des Kreislaufwassers kontinuierlich durch ein Rohr leitet, das mit einer konstanten Heizleistung beheizt wird und dessen Oberflächentemperatur mit einem Temperaturfühler gemessen wird. Bilden sich Ablagerungen an der inneren Rohrwandung, verzögern diese den Wärmefluß von dem Rohr in das durchfließende Wasser, so daß die Temperatur des Rohres ansteigt. Je höher der Temperaturanstieg, desto dickere Beläge haben sich gebildet. Die Keimbelastung im Kreislaufwasser kann dadurch ermittelt werden, daß man den Gehalt des Kreislaufwassers an Adenosintriphosphat (ATP) bestimmt. Ergänzend oder alternativ hierzu kann bei Verwendung eines oxidierend wirkenden Biozids das Redoxpotential im Kreislaufwasser gemessen werden. Oder man mißt den Gehalt an freiem Halogen im Kreislaufwasser. Ein hohes Redoxpotential bzw. ein hoher Halogengehalt deutet darauf hin, daß die Keimbelastung des Kreislaufwassers gering ist.

Weiterhin kann die Kontrollgröße im zweiten Regelkreis ausgewählt sein aus der elektrischen Leitfähigkeit des Kreislaufwassers oder einem oder mehreren Inhaltsstoff des Kreislaufwassers. Aus diesen Größen läßt sich schließen, ob und wie stark sich die Betriebsbedingungen des Kühlkreislaufs verändert haben und daher eine Anpassung der Produktdosierung erforderlich ist. Demgemäß stellt man in dieser Ausführungsform des erfindungsgemäßen Verfahrens je nach Wert der Kontrollgröße die Soll-Konzentration mindestens eines Dispergators, Korrosionsinhibitors und/oder mindestens eines Härtestabilisators im ersten Regelkreis nach einem vorgegebenen Schema ein. Dieses Schema kann auf Erfahrungswerten beruhen, aus denen man weiß, welche Konzentrationen von Dispergatoren, Korrosionsinhibitoren und/oder Härtestablisatoren bei welchen Konzentrationen welcher Kreislaufwasser-Inhaltsstoffe in der Regel erforderlich sind. Dabei wird vorzugsweise vorgesehen, daß die Erhöhung der Soll-Konzentration des oder der Dispergatoren, Korrosionsinhibitoren und/oder des oder der Härtestabilisatoren im ersten Regelkreis nach dem vorgegebenen Schema automatisch und ohne menschliches Eingreifen erfolgt. Beispielsweise kann die Erhöhung der Leitfähigkeit im Kreislaufwasser auf einen erhöhten Elektrolytgehalt und gegebenenfalls auf eine erhöhte Korrosivität oder auf eine erhöhte Ablagerungstendenz schließen lassen. Dem wirkt man - vorzugsweise automatisch - durch eine Erhöhung der Soll-Konzentrationen der Dispergatoren, Härtestabilisatoren und/oder Korrosionsinhibitoren im ersten Regelkreis entgegen.

Als Kreislaufwasser-Parameter kommen weiterhin die Säurekapazität, beispielsweise bis pH = 4,3 (sogenannter $K_{S4,3}$-Wert, früher als "m-Wert" bezeichnet. Die Bestimmung kann nach DIN 38409, Teil 7 erfolgen.), und/oder die Konzentrationen von Natrium-, Kalium-, Calcium-, Magnesium-, Eisen-, Kupfer-, Zink-, Nitrat-, Sulfat- und/oder Chloridionen in Betracht. Die Säurekapazität in mmol/l wird bestimmt, indem man 100 ml Wasser mit einer 0,1 n Säurelösung bis zu einem vorgegebenen pH-Wert titriert. Wählt man als vorgegebenen pH-Wert 4,3, so spricht man von dem $K_{S4,3}$-Wert. Titriert man bis pH = 8,2, erhält man den $K_{S8,2}$-Wert. Der Verbrauch an ml 0,1 n Säure entspricht dem Zahlenwert der Säurekapazität. Liegt der $K_{S4,3}$-Wert oberhalb eines vorgegebenen Grenzwerts, wird vorzugsweise vorgesehen, daß Säure in das Kreislaufwasser dosiert wird. Hierfür kommen insbesondere Salzsäure oder Schwefelsäure in Frage. Außerdem kann - vorzugsweise automatisch - die Soll-Konzentration von Härtestabilisatoren, Dispergatoren und/oder Korrosionsinhibitoren im ersten Regelkreis angepaßt werden.

Vorzugsweise wählt man hierbei einen oder mehrere Parameter, die durch die zugesetzten Wasserbehandlungsprodukte nicht oder kaum verändert werden. Jedoch ist es durchaus möglich, Parameter zu messen, die von den eingesetzten Wasserbehandlungsprodukten beeinflußt werden. In solchen Fällen ist es lediglich erforderlich, daß man die Änderung des Zahlenwerts des gemessenen Parameters, die auf den Zusatz der Wasserbehandlungsprodukte zurückgeht, aus der bekannten (beispielsweise gemessenen oder abgeschätzten) zugesetzten Menge dieser Produkte ermittelt und von den im Kreislaufwasser gemessenen Werten abzieht.

Vorzugsweise wählt man als Kreislauf-Parameter die elektrische Leitfähigkeit und/oder die Konzentration von Chlorid- und/oder Calciumionen. Die Konzentrationen können mit Ionen-selektiven Elektroden oder auch durch potentiometrische Titration bestimmt werden. Die Messung der elektrischen Leitfähigkeit ist besonders bevorzugt, da diese einfach mit einer Leitfähigkeitselektrode gemessen werden kann.

Dabei kann die Chloridkonzentration beispielsweise durch eine Biozidbehandlung in Form einer Chlorung oder durch Zugabe von Hypochlorit beeinflußt werden. Auch die Natriumkonzentration kann durch eine Biozidbehandlung (Zugabe von Natriumhypochlorit und/oder Natriumbromid) beeinflußt werden. In diesen Fällen zieht man den Anteil an der Gesamtkonzentration der Chlorid- und/oder Natriumionen im Kreislaufwasser, der auf die Zugabe bekannter Mengen der biozid wirkenden Salze zurückzuführen ist, von den gefundenen Werten ab.

Wird die Kontrolle über die Leitfähigkeit vorgenommen, kann der Einfluß der Säuredosierung zur pH-Kontrolle auf die Leitfähigkeit im Kreislaufwasser über die Messung der dosierten Mengen mit Hilfe der aus Tabellenwerken zu entnehmenden oder experimentell zu bestimmenden Äquivalenzleitfähigkeiten gemäß der Reaktionsgleichung

$$HCO_3^- + HX \rightarrow CO_2 + H_2O + X^-,$$

mit

$$X^- = Cl^-, NO_3^-, \tfrac{1}{2} SO_4^{2-}$$

etc. bestimmt werden.

Eine weitere Ausführungsform des erfindungsgemäßen Verfahrens ist dadurch gekennzeichnet, daß die Kontrollgröße im zweiten Regelkreis ausgewählt ist aus der Konzentration mindestens eines Wirkstoffs zur Behandlung des Kreislaufwassers und daß man in dem Falle, daß die Konzentration um einen vorgegebenen Betrag von der Soll-Konzentration des ersten Regelkreises abweicht, automatisch eine Überprüfung der im ersten und/oder zweiten Regelkreis eingesetzten durchführt.

Demnach bestimmt man in dieser Ausführungsform die Konzentration mindestens eines Wirkstoffs zur Behandlung des Kreislaufwassers unabhängig voneinander sowohl im ersten Regelkreis als auch im zweiten Regelkreis. Theoretisch sollten beide Bestimmungen Werte liefern, die im Rahmen der Meßgenauigkeit und zulässiger statistischer Schwankungen im wesentlichen miteinander übereinstimmen. Weichen die Ergebnisse der unabhängigen Bestimmungen jedoch um einen vorzugebenden Mindestbetrag voneinander ab, kann dies ein Hinweis darauf sein, daß mindestens eine der im ersten oder im zweiten Regelkreis eingesetzten Meßeinrichtungen fehlerhaft arbeitet. Daher sieht man in dieser Ausführungsform vor, daß man bei Abweichung der Ergebnisse automatisch eine Überprüfung der im ersten und/oder zweiten Regelkreis eingesetzten Vorrichtungen durchführt. In dieser Ausführungsform erhöht das erfindungsgemäße Verfahren durch den zweiten Regelkreis die Verfahrenssicherheit für die gemäß erstem Regelkreis zu treffenden Maßnahmen. Der zweite Regelkreis kontrolliert den ersten.

Dabei wählt man den Wirkstoff zur Behandlung des Kreislaufwassers, dessen Konzentration im zweiten Regelkreis gemessen wird, vorzugsweise aus solchen Wirkstoffen, deren Konzentrationen automatisch bestimmbar ist. Dabei kann die Konzentration des ausgewählten Wirkstoffs gleichzeitig die Leitfunktion für Konzentrationen anderer Wirkstoffe übernehmen, wenn unterschiedliche Wirkstoffe aus demselben Vorratsgefäß mit derselben Dosiereinrichtung dosiert werden. Beispielsweise kann der Wirkstoff zur Behandlung des Kreislaufwassers, dessen Konzentration man in dieser Ausführungsform vorzugsweise mißt, ausgewählt sein aus Phosphonsäuren, Polycarbonsäuren, Nitrit, Molybdat, Triazol, Zink, Amin und Phosphat.

Dabei führt man die Einzelschritte des erfindungsgemäßen Verfahrens unabhängig von der gewählten Ausführungsform vorzugsweise programmgesteuert und automatisch durch, so daß sie in der Regel kein menschliches Eingreifen erfordern. Hierdurch wird die Betriebssicherheit des Kühlkreislaufs bei gleichzeitig reduziertem menschlichen Betreuungsaufwand erhöht. Im allgemeinen werden die Analysen im ersten Regelkreis annähernd kontinuierlich, zumindest in relativ kurzen Zeitabständen im Bereich von etwa 1 bis etwa 24 Stunden durchgeführt. Demgegenüber kann im zweiten Regelkreis die Kontrollgröße in größeren Zeitabständen überprüft werden, beispielsweise täglich, wöchentlich, monatlich oder in seltenen Fällen etwa einmal pro Jahr. Dabei kann die Kontrollfrequenz von den bisherigen Erfahrungen mit dem betroffenen Kühlkreislauf abhängig gemacht werden. Je konstanter dieser betrieben werden kann, desto seltener sind Kontrollmessungen gemäß dem zweiten Regelkreis erforderlich. Im Rahmen des erfindungsgemäßen Verfahrens kann jedoch vorgesehen werden, daß dann, wenn bei den Kontrollmessungen im zweiten Regelkreis Abweichungen festgestellt werden, zunächst die Häufigkeit der Kontrollmessungen erhöht wird, bevor eine oder mehrere der vorgesehenen Maßnahmen durchgeführt werden. Hierdurch kann verhindert werden, daß aufgrund einer statistischen Schwankung oder eines einmaligen Ereignisses bereits vorschnell Maßnahmen ergriffen werden. Daher sieht man vorzugsweise vor, daß eine oder mehrere der vorgesehenen Maßnahmen im zweiten Regelkreis erst dann durchgeführt werden, wenn sich die festgestellte Abweichung bei mindestens einer weiteren Kontrollmessung bestätigt hat. Jedoch ist es empfehlenswert, die festgestellte Abweichung in jedem Fall auf einem Datenträger festzuhalten. Hierdurch wird eine Art "Logbuch" des Kühlkreislaufs geführt.

Vorzugsweise führt man das erfindungsgemäße Verfahren demnach vollständig oder zumindest weitgehend automatisch durch. Dies bedeutet, daß man für die einzelnen Meßparameter Meßeinrichtungen vorsieht, die ohne manuelles Eingreifen programmgesteuert betrieben werden können. Elektrochemische oder optische Meßverfahren sind hierfür besonders geeignet. Hierbei fallen die Meßergebnisse in Form elektrischer Signale an, die durch eine geeignete Auswerteeinheit weiter verarbeitet und in den Steuerrechner übertragen werden können. Insbesondere sieht man im Rahmen eines automatisiert ablaufenden Verfahrens vorzugsweise vor, daß einer oder mehrere der während des Ablaufs der einzelnen Verfahrensschritte erhaltenen Meßwerte und/oder eines oder mehrere hieraus abgeleitete Berechnungsergebnisse auf Datenträger gespeichert und/oder an einen vorgegebenen Ort übertragen werden. Die Speicherung auf Datenträger ermöglicht es, die nach dem erfindungsgemäßen Verfahren bestimmten Werte und die hieraus abgeleiteten Maßnahmen längere Zeiträume zu verfolgen und auszuwerten. Hierdurch wird den Anforderungen an eine moderne Qualitätssicherung Rechnung getragen. Durch die Übertragung der Daten bzw. der Berechnungsergebnisse an einen vorgegebenen Ort ist es möglich, sich auch aus der Ferne jederzeit einen Einblick in die Betriebsweise des Kühlkreislaufs und über die Dosiermengen der Wasserbehandlungsprodukte zu verschaffen. Dabei kann der vorgegebene Ort innerhalb des Werkes liegen, zu dem der Kühlkreislauf gehört, und beispielsweise eine zentrale Leitwarte darstellen.

Demnach führt man das erfindungsgemäße Verfahren unabhängig von der gewählten Ausführungsform vorzugsweise so durch, daß die Alarmmeldungen und/oder die Ergebnisse der Ermittlung von Größen im ersten und/oder zweiten Regelkreis und die im zweiten Regelkreis getroffenen Maßnahmen auf einem Datenträger festgehalten und/oder auf einer Ausgabeeinheit ausgegeben werden. Dabei kann der vorgegebene Ort des Festhaltens auf einem Datenträger und/oder der Ausgabe auf einer Ausgabeeinheit auch außerhalb des Werkes liegen, in dem der Kühlkreislauf betrieben wird. Ein solcher Ort, der beispielsweise beim Hersteller der eingesetzten Wasserbehandlungsprodukte liegen kann, wird in den Ansprüchen 10 und 11 als "entfernter Ort" bezeichnet. Die Speicherung von Meßergebnissen und getroffenen Maßnahmen und/oder deren Ausgabe an einem entfernten Ort hat den Vorteil, daß der Lieferant der Produkte zur Behandlung des Kreislaufwassers jederzeit über den Zustand des Kühlkreislaufs informiert ist, ohne daß sich Mitarbeiter am Ort des Kühlkreislaufs aufhalten müssen. Hierdurch verringert sich der personelle Aufwand, der für die Betreuung des Kühlkreislaufs erforderlich ist. Mißt man im Rahmen des erfindungsgemäßen Verfahrens zusätzlich die Verbräuche der Produkte zur Behandlung des Kreislaufwassers und/oder die Füllstände der entsprechenden Vorratsbehälter am Ort des Kühlkreislaufs, kann der Hersteller der Produkte zur Behandlung des Kreislaufwassers rechtzeitig Dispositionen zum Ergänzen der Produktvorräte am Ort des Kühlkreislaufs treffen.

Weiterhin sieht man im Rahmen des erfindungsgemäßen Verfahrens vorzugsweise vor, daß die Soll-Konzentration eines oder mehrerer Wirkstoffe zur Behandlung des Kreislaufwassers auch unabhängig von den im zweiten Regelkreis eventuell automatisch getroffenen Maßnahmen von dem entfernten Ort aus verändert werden können. Hierdurch ist es möglich, die Betriebsweise des Kühlkreislaufs veränderten Umständen wie beispielsweise einer wechselnden Qualität des Frischwassers aus der Ferne anzupassen, ohne daß sich Personal am Ort des Kühlkreislaufs aufhalten muß. Weiterhin sieht man vorzugsweise vor, Entscheidungsgrößen für den automatischen Ablauf des zweiten Regelkreises wie beispielsweise vorzugebende Erwartungswerte bzw. vorzugebende Abweichungen, bei denen Maßnahmen automatisch ergriffen werden sollen, von dem entfernten Ort aus verändern zu können. Hierdurch ist es möglich, den Ablauf des erfindungsgemäßen Verfahrens aus der Ferne geänderten Bedingungen anzupassen.

Das erfindungsgemäße Verfahren kann mit bekannten Verfahren zum Beeinflussen von Parametern im Kühlwasserkreislauf sowie zur Erfolgskontrolle der vorgenommenen Dosierung der Wasserbehandlungsprodukte gekoppelt werden. Beispielsweise kann im erfindungsgemäßen Verfahren zusätzlich vorgesehen werden, daß der pH-Wert im Kreislaufwasser kontinuierlich oder zu bestimmten Zeitpunkten gemessen wird. Hierfür kann beispielsweise eine pHsensitive Elektrode eingesetzt werden. Bei einer Abweichung vom Sollwert kann der pH-Wert automatisch durch Zudosieren von Säure oder Lauge korrigiert werden. Werden durch diese Korrekturmaßnahmen Parameter im Kühlwasserkreislauf verändert, so kann dieser Einfluß vom Steuersystem des Verfahrens automatisch berücksichtigt werden.

Weiterhin können im Stand der Technik bekannte Einrichtungen vorgesehen werden, die zusätzliche für die Kühlwasserbehandlung wichtige Parameter messen und aufzeichnen, auch wenn dies für die Ausführungsform des erfindungsgemäßen Verfahrens nicht erforderlich ist. Vorzugsweise können diese Werte von dem vorstehend beschriebenen entfernten Ort aus abgefragt werden. Stellt man hierbei Abweichungen vom erwünschten Betriebszustand fest, können dann von dem entfernten Ort aus die Sollkonzentrationen der Wasserbehandlungsprodukte so abgeändert werden, daß sich der Betriebszustand des Kühlkreislaufs in die erwünschte Richtung verschiebt. Beispielsweise können Einrichtungen vorgesehen werden, die Wasserparameter wie beispielsweise Konzentrationen von $Ca^{2+}$, $Mg^{2+}$, $Cl^-$, $SO_4^{2-}$, Silicat, ausgewählte Schwermetalle, beispielsweise Fe, Cu, Cr, Mn, Zn, Säurekapazität, z.B. bis zum pH-Wert 8,2 oder 4,3, Wassertrübung, Wassertemperatur, RedoxPotential, Korrosions- und Foulingrate bestimmen und aufzeichnen.

Weiterhin wird vorzugsweise vorgesehen, daß im Rahmen des erfindungsgemäßen Verfahrens die Füllstände der Wasserbehandlungsprodukte in ihrem jeweiligen Vorratsbehälter überwacht werden. Bei Unterschreiten eines vorgegebenen Mindestfüllstandes in einem oder mehreren Vorratsbehältern kann eine Alarmmeldung in die Meßwarte und/oder an einen entfernten Ort abgegeben werden.

Weiterhin kann die Steuereinrichtung für das erfindungsgemäße Verfahren mit Meßeinrichtungen gekoppelt werden, die die Eindickung des Kreislaufwassers messen. Zum Messen der Eindickrate sind unterschiedliche Parameter wie beispielsweise Dichte des Kreislaufwassers, elektrische Leitfähigkeit, Gesamthärte oder die Konzentrationen vorgegebener Wasserinhaltsstoffe geeignet. Beim Erreichen vorgegebener Schwellenwerte kann automatisch eine Abflutung eines Teils des Kreislaufwassers vorgesehen werden. Jedoch ist es vorzugsweise auch möglich, unabhängig hiervon von einer Leitwarte oder von einem entfernten Ort aus eine Abflutung von Kreislaufwasser vorzunehmen.

Das erfindungsgemäße Verfahren zur Kontrolle der Dosiermengen von Wasserbehandlungsprodukten ist insbesondere für offene Kühlkreisläufe konzipiert. Bei diesen treten Verluste von Kreislaufwasser auf, die unterschiedliche Ursachen haben: Verdampfung, gesteuerte Abflutung und/oder unkontrollierte Spritzverluste und Leckagen. Das Verfahren ist jedoch auch zur Kontrolle geschlossener Kreisläufe geeignet, wo theoretisch überhaupt keine Verluste an Kreislaufwasser eintreten sollten. Da jedoch auch bei solchen geschlossenen Kühlkreisläufen Wasserverluste durch Leckagen eintreten können, die durch eine Frischwasserzufuhr ausgeglichen werden, kann das erfindungsgemäße Verfahren auch hierfür eingesetzt werden.

Das erfindungsgemäße Verfahren hat demnach den Vorteil, daß ohne Erhöhen des manuellen Betreuungsaufwandes, in der Regel sogar unter dessen Verminderung, die Betriebssicherheit des Kühlkreislaufs erhöht werden kann. Der Kühlkreislauf kann hierdurch wirtschaftlicher betrieben werden.

## Patentansprüche

1. Verfahren zur Kontrolle der Dosiermenge von Produkten zur Behandlung des Kreislaufwassers von offenen oder geschlossenen Kühlkreisläufen, wobei man

   a) in einem ersten Regelkreis die aktuelle Ist-Konzentration eines oder mehrerer Wirkstoffe zur Behandlung des Kreislaufwassers ermittelt, mit einer vorgegebenen Soll-Konzentration vergleicht und in dem Falle, daß die Ist-Konzentration geringer ist als die Soll-Konzentration, eine entsprechende Menge eines oder mehrerer Produkte zur Behandlung des Kreislaufwassers in das Kreislaufwasser zudosiert und

   b) in einem zweiten Regelkreis eine oder mehrere Kontrollgrößen ermittelt, die für den Erfolg der Behandlung des Kreislaufwassers durch Dosierung eines oder mehrerer Produkte zur Behandlung des Kreislaufwassers im ersten Regelkreis charakteristisch sind, und beim Überschreiten einer vorgegebenen Abweichung mindestens einer Kontrollgröße von einem vorgegebenen Erwartungswert automatisch eine oder mehrere der folgenden Maßnahmen veranlaßt: Erhöhung der Analysenhäufigkeit im ersten und/oder zweiten Regelkreis, Anpassen der Soll-Konzentration eines oder mehrerer Wirkstoffe zur Behandlung des Kreislaufwassers im ersten Regelkreis, Überprüfung der Funktionsfähigkeit der im ersten und/oder zweiten Regelkreis eingesetzten Vorrichtungen.

2. Verfahren nach Anspruch 1, **dadurch gekennzeichnet, daß** das oder die Produkte zur Behandlung des Kreislaufwassers ausgewählt sind aus Produkten, die Entschäumern, Härtestabilisatoren, Dispergatoren, Korrosionsinhibitoren, Bioziden, Säuren, Laugen und Kombinationen hiervon enthalten.

3. Verfahren nach einem oder beiden der Ansprüche 1 und 2, **dadurch gekennzeichnet, daß** die eine oder mehrere Kontrollgrößen im zweiten Regelkreis ausgewählt sind aus der Konzentration mindestens eines Wirkstoffs zur Behandlung des Kreislaufwassers, dem Produktschwund im Kreislaufwasser, dem pH-Wert des Kreislaufwassers, der Säurekapazität des Kreislaufwassers, der Leitfähigkeit des Kreislaufwassers, einem Inhaltsstoff des Kreislaufwassers, der Korrosionsrate im Kreislaufwasser, dem Pitting-Index im Kreislaufwasser, der Foulingrate oder einer anderen Größe, die die Ablagerungstendenz im Kreislaufwasser beschreibt, und der Keimbelastung im Kreislaufwasser.

4. Verfahren nach Anspruch 3, **dadurch gekennzeichnet, daß** die Kontrollgröße im zweiten Regelkreis der Produktschwund im Kreislaufwasser darstellt.

5. Verfahren nach Anspruch 3, **dadurch gekennzeichnet, daß** die Kontrollgröße im zweiten Regelkreis ausgewählt ist aus der Korrosionsrate im Kreislaufwasser, dem Pitting-Index im Kreislaufwasser, der Foulingrate oder einer anderen Größe, die die Ablagerungstendenz im Kreislaufwasser beschreibt, und der Keimbelastung im Kreislaufwasser und daß man in dem Fall, daß der Wert der Kontrollgröße einen vorgegebenen Maximalwert überschreitet, eine Warnmeldung ausgibt und/oder die im ersten Regelkreis eingesetzten Vorrichtungen überprüft und/oder im ersten Regelkreis die Soll-Konzentration desjenigen Wirkstoffs zur Behandlung des Kreislaufwassers erhöht, das der Erhöhung der jeweiligen Kontrollgröße entgegenwirkt.

6. Verfahren nach Anspruch 3, **dadurch gekennzeichnet, daß** die Kontrollgröße im zweiten Regelkreis ausgewählt ist aus der Säurekapazität des Kreislaufwassers, der elektrischen Leitfähigkeit des Kreislaufwassers oder einem Inhaltsstoff des Kreislaufwassers und daß man je nach Wert der Kontrollgröße die Soll-Konzentration mindestens eines Dispergators, Korrosionsinhibitors und/oder mindestens eines Härtestabilisators im ersten Regelkreis nach einem vorgegebenen Schema einstellt.

7. Verfahren nach Anspruch 3, **dadurch gekenn-**

**zeichnet, daß** die Kontrollgröße im zweiten Regelkreis ausgewählt ist aus der Konzentration mindestens eines Wirkstoffs zur Behandlung des Kreislaufwassers und daß man in dem Falle, daß die Konzentration um einen vorgegebenen Betrag von der Soll-Konzentration des ersten Regelkreises abweicht, automatisch eine Überprüfung der im ersten und/oder zweiten Regelkreis eingesetzten Vorrichtungen durchführt.

8. Verfahren nach einem oder mehreren der Ansprüche 1 bis 7, **dadurch gekennzeichnet, daß** die Einzelschritte des Verfahrens programmgesteuert automatisch ablaufen.

9. Verfahren nach einem oder mehreren der Ansprüche 1 bis 8, **dadurch gekennzeichnet, daß** die Wammeldungen und/oder die Ergebnisse der Ermittlung von Größen im ersten und/oder zweiten Regelkreis und die im zweiten Regelkreis getroffenen Maßnahmen auf einem Datenträger festgehalten und/oder auf einer Ausgabeeinheit ausgegeben werden.

10. Verfahren nach Anspruch 9, **dadurch gekennzeichnet, daß** die Warnmeldungen und/oder Ergebnisse der Ermittlung von Größen im ersten und/oder zweiten Regelkreis und die im zweiten Regelkreis getroffenen Maßnahmen an einem entfernten Ort auf einem Datenträger festgehalten und/oder oder auf einer Ausgabeeinheit ausgegeben werden.

11. Verfahren nach einem oder mehreren der Ansprüche 1 bis 10, **dadurch gekennzeichnet, daß** die Soll-Konzentration eines oder mehrerer Wirkstoffe zur Behandlung des Kreislaufwassers im ersten Regelkreis und/ oder vorzugebende Erwartungswerte und/oder maximale Abweichungen von einem entfernten Ort aus verändert werden können.

**Claims**

1. A process for controlling the metered amounts of products used to treat the circulation water of open or closed circulation cooling systems, wherein:

   (a) in a first regulating loop, the actual concentration of one or more active constituents used to treat the circulation water is determined, compared to a predetermined desired concentration, and, if the actual concentration is less than the desired concentration, an appropriate amount of one or more products for treating the circulation water is added to the latter; and
   (b) in a second regulating loop, one or more control quantities are determined that are characteristic for the success of the treatment of the circulation water by metering one or more products for treating the circulation water in a first regulating loop, and if a predetermined deviation of at least one control quantity from a predetermined expected value is exceeded, then one or more of the following measures is initiated automatically: increase in the analysis frequency in the first and/or second regulating loop, adaptation of the desired concentration of one or more active constituents for treating the circulation water in the first regulating loop, and checking of the functional reliability of the devices employed in the first and/or second regulating loop.

2. A process according to claim 1 wherein the product or products used to treat the circulation water is/are selected from products that contain defoaming agents, hardness stabilisers, dispersants, corrosion inhibitors, biocides, acids, alkalis and combinations thereof.

3. A process according to one or both of claims 1 and 2 wherein the one or more control quantities in the second regulating loop are selected from the concentration of at least one active constituent for treating the circulation water, the product loss in the circulation water, the pH of the circulation water, the acid capacity of the circulation water, the conductivity of the circulation water, a constituent of the circulation water, the corrosion rate in the circulation water, the pitting index in the circulation water, the fouling rate or another quantity that describes the deposition tendency in the circulation water, and the bacterial contamination in the circulation water.

4. A process according to claim 3 wherein the control quantity in the second regulating loop is the product loss in the circulation water.

5. A process according to claim 3 wherein the control quantity in the second regulating loop is selected from the corrosion rate in the circulation water, the pitting index in the circulation water, the fouling rate or another quantity that describes the deposition tendency in the circulation water, and from the bacterial contamination in the circulation water, and, if the value of the control quantity exceeds a predetermined maximum value, then a warning notification is issued and/or the devices used in the first regulating loop are checked and/or in the first regulating loop the desired concentration of that active constituent used to treat the circulation water is increased, which counteracts the increase in the respective control quantity.

**6.** A process according to claim 3 wherein the control quantity in the second regulating loop is selected from the acid capacity of the circulation water, the electrical conductivity of the circulation water or a constituent of the circulation water, and, depending on the value of the control quantity, the desired concentration of at least one dispersant, corrosion inhibitor and/or at least one hardness stabiliser in the first regulating loop is adjusted according to a predetermined procedure.

**7.** A process according to claim 3 wherein the control quantity in the second regulating loop is selected from the concentration of at least one active constituent used to treat the circulation water, and, if the concentration deviates by a specified amount from the desired concentration in the first regulating loop, the devices used in the first and/or second regulating loop are automatically checked.

**8.** A process according to one or more of claims 1 to 7 wherein the individual steps of the process proceed automatically in a programmably-controlled manner.

**9.** A process according to one or more of claims 1 to 8 wherein the warning notifications and/or the results of the determination of quantities in the first and/or second regulating loop and the measures adopted in the second regulating loop are stored on a data carrier and/or output at an output unit.

**10.** A process according to claim 9 wherein the warning notifications and/or results of the determination of quantities in the first and/or second regulating loop and the measures adopted in the second regulating loop are stored on a data carrier and/or are output at an output unit at a remote site.

**11.** A process according to one or more of claims 1 to 10 wherein the desired concentration of one or more active constituents used to treat the circulation water in the first regulating loop and/or expected values to be specified and/or maximum deviations may be altered from a remote site.

**Revendications**

**1.** Procédé destiné à contrôler le dosage des produits destinés au traitement de l'eau des circuits de refroidissement ouverts ou fermés, dans lequel

> a) on détermine dans un premier circuit de régulation la concentration effective actuelle d'une ou de plusieurs substances actives destinées au traitement de l'eau de circuit, on la compare avec une concentration de consigne prédéfinie et au cas où la concentration effective est inférieure à la concentration de consigne, on ajoute par adjonction dosée dans l'eau de circuit une quantité correspondante d'un ou de plusieurs produits destinés au traitement de l'eau de circuit et
>
> b) on détermine dans un deuxième circuit de régulation une ou plusieurs grandeurs de contrôle, qui sont caractéristiques du résultat du traitement de l'eau de circuit par dosage d'un ou de plusieurs produits destinés au traitement de l'eau de circuit dans le premier circuit de régulation et en cas de dépassement d'un écart prédéfini d'au moins une grandeur de contrôle par rapport à une valeur escomptée prédéfinie, on déclenche automatiquement une ou plusieurs des mesures suivantes: augmentation de la fréquence d'analyse dans le premier et/ou le deuxième circuit de régulation, adaptation de la concentration de consigne d'une ou de plusieurs substances actives destinées au traitement de l'eau de circuit dans le premier circuit de régulation, contrôle du bon fonctionnement des dispositifs mis en oeuvre dans le premier et/ou le deuxième circuit de régulation.

**2.** Procédé selon la revendication 1, **caractérisé en ce que** le ou les produits destinés au traitement de l'eau de circuit sont sélectionnés parmi les produits contenant des antimousse, des stabilisants de dureté, des dispersants, des inhibiteurs de corrosion, des biocides, des acides, des bases et des associations de ceux-ci.

**3.** Procédé selon une ou deux des revendications 1 et 2, **caractérisé en ce que** la ou les grandeur de contrôle dans le deuxième circuit de régulation sont sélectionnés parmi la concentration d'au moins une substance active destinée au traitement de l'eau, la déperdition de produit dans l'eau de circuit, l'alcalinité ou la capacité en acide de l'eau de circuit, la conductibilité de l'eau de circuit, un constituant de l'eau de circuit, le taux de corrosion dans l'eau de circuit, l'index Pitting de l'eau de circuit, le taux d'encrassement ou une autre grandeur qui décrit la tendance à la sédimentation dans l'eau de circuit, et la contamination microbienne de l'eau de circuit.

**4.** Procédé selon la revendication 3, **caractérisé en ce que** la grandeur de contrôle dans le deuxième circuit de régulation est la déperdition de produit dans l'eau de circuit.

**5.** Procédé selon la revendication 3, **caractérisé en ce que** la grandeur de contrôle dans le deuxième circuit de régulation est sélectionnée parmi le taux de corrosion dans l'eau de circuit, l'index Pitting de l'eau de circuit, le taux d'encrassement ou une autre grandeur qui décrit la tendance à la sédimentation dans l'eau de circuit, et la contamination microbienne de l'eau de circuit et **en ce qu'**au cas où la valeur de la grandeur de contrôle dépasse une valeur maximale prédéfinie, un message d'avertissement est émis et/ou les dispositifs mis en oeuvre dans le premier circuit de régulation sont contrôlés et/ou la concentration de consigne de la substance active destinée au traitement de l'eau, qui neutralise l'augmentation de la grandeur de contrôle en question, est augmentée dans le premier circuit de régulation.

6. Procédé selon la revendication 3, **caractérisé en ce que** la grandeur de contrôle dans le deuxième circuit de régulation est sélectionnée parmi l'alcalinité de l'eau de circuit la conductibilité électrique de l'eau de circuit ou un constituant de l'eau de circuit et ce que l'on ajuste, selon la valeur de la grandeur de contrôle, la concentration de consigne d'au moins un dispersant, d'un inhibiteur de corrosion et/ou d'au moins un stabilisant de dureté dans le premier circuit de régulation selon un schéma prédéfini.

7. Procédé selon la revendication 3, **caractérisé en ce que** la grandeur de contrôle dans le deuxième circuit de régulation est sélectionnée parmi la concentration d'au moins une substance active destinée au traitement de l'eau de circuit et **en ce qu'**au cas où la concentration s'écarte d'une valeur prédéfinie de la concentration de consigne du premier circuit de régulation, un contrôle des dispositifs mis en oeuvre dans le premier et/ou dans le deuxième circuit est automatiquement opéré.

8. Procédé selon une ou plusieurs des revendications 1 à 7, **caractérisé en ce que** les étapes individuelles du procédé se déroulent automatiquement par commande par programme.

9. Procédé selon une ou plusieurs des revendications 1 à 8, **caractérisé en ce que** les messages d'alarme et/ou les résultats de la détermination des grandeurs dans le premier et/ou le deuxième circuit de régulation et les mesures prises dans le deuxième circuit de régulation sont mémorisés sur un support de données et/ou sortis sur une unité de sortie.

10. Procédé selon la revendication 9, **caractérisé en ce que** les messages d'alarme et/ou les résultats de la détermination des grandeurs dans le premier et/ou le deuxième circuit de régulation et les mesures prises dans le deuxième circuit de régulation sont mémorisés sur un support de données et/ou sortis sur une unité de sortie à un site éloigné.

11. Procédé selon une ou plusieurs des revendications 1 à 10, **caractérisé en ce que** la concentration de consigne d'une ou de plusieurs substances actives destinées au traitement de l'eau de circuit dans le premier circuit de régulation et/ou les valeurs escomptées prédéfinies et/ou les écarts maximums peuvent être modifiés à partir d'un site éloigné.